# EUROPÄISCHE PATENTSCHRIFT

(11) **EP 1 222 055 B1**
(45) Veröffentlichungstag und Bekanntmachung des Hinweises auf die Patenterteilung: **06.08.2003**
(21) Anmeldenummer: 00975886.3
(22) Anmeldetag: 19.10.2000
(51) Int. Cl.: B23Q 17/09, B23Q 17/22, B23Q 17/24, G01V 8/12, G01B 11/00

(54) **VERFAHREN UND VORRICHTUNG ZUM PRÜFEN EINER SCHNEIDENGEOMETRIE EINES DREHANTREIBBAREN WERKZEUGS**
METHOD AND DEVICE FOR TESTING THE CUTTING EDGE GEOMETRY OF A ROTARY-DRIVEN TOOL
PROCEDE ET DISPOSITIF PERMETTANT DE TESTER LA GEOMETRIE DU TRANCHANT D'UN OUTIL POUVANT ETRE ENTRAINE EN ROTATION

(30) Priorität: 19.10.1999 DE 19950331
(43) Veröffentlichungstag der Anmeldung: 17.07.2002
(73) Patentinhaber: Blum-Novotest GmbH, 88287 Grünkraut (DE)
(72) Erfinder: BUCHER, Heribert, 88069 Tettnang (DE); RIEDTER, Bruno, 88250 Weingarten (DE)
(74) Vertreter: Goetz, Rupert, Dipl.-Ing.
(86) Internationale Anmeldenummer: EP0010313
(87) Internationale Veröffentlichungsnummer: WO01028737

(56) Entgegenhaltungen:
- DE-C- 19 720 176
- US-A- 3 817 647
- US-A- 3 900 738
- US-A- 4 667 113
- PATENT ABSTRACTS OF JAPAN vol. 014, no. 510 (M-1045), 8. November 1990 (1990-11-08) & JP 02 212045 A (DISCO ABRASIVE SYST LTD), 23. August 1990 (1990-08-23)

## Beschreibung

Die Erfindung betrifft ein Verfahren zum Prüfen einer Schneidengeometrie eines drehantreibbaren Werkzeugs und eine Vorrichtung zur Durchführung des erfindungsgemäßen Verfahrens. Insbesondere betrifft die Erfindung die Prüfung einer Schneidengeometrie eines Werkzeugs zur Bruch- und Verschleißkontrolle mittels eines Meßstrahls.

Die Verwendung von Meßsystemen zum Prüfen von drehantreibbaren Werkzeugen unter Verwendung eines Meßstrahls, insbesondere eines optischen Meßstrahls, ist bekannt. So wird in DE 42 38 504 ein Verfahren beschrieben, das unter Verwendung eines dünnen Laserstrahls die Länge und den Durchmesser eines Werkzeugs sowie Rundheitsfehler vermißt. Auf diese Weise kann nicht nur die Einstellung des Werkzeugs überprüft, sondern auch Verschleiß oder ein Bruch des Werkzeugs erkannt werden. Hierbei wird das Werkzeug einer optischen Meßebene senkrecht zu der Meßebene zugestellt. Das Meßsystem gibt ein Signal aus, das angibt, ob das Werkzeug in die Meßebene eintaucht. Beim Eintauchen des Werkzeugs wird dessen relative Lage gegenüber der Meßebene bestimmt, um unter Verwendung von Referenzpunkten die Maße des Werkzeugs zu berechnen. Um zusätzlich die Rundheit und den Durchmesser des Werkzeugs zu bestimmen, wird das sich drehende Werkzeug der Meßebene auch parallel zur Meßebene zugeführt.

Um Beeinträchtigungen des Meßvorgangs aufgrund von Verunreinigungen der Luft in einem Meßbereich eines optischen Meßsystems zu vermeiden, wird gemäß DE 42 44 869 nur dann ein Signal erzeugt, das das Eintauchen eines Werkzeugs in die Meßebene angibt, wenn ein drastischer Signalabfall in einem als Meßstrahl verwendeten Laserstrahl detektiert wird. Zusätzlich werden von dem Meßsystem Vergleichswerte aufgenommen, die als Referenzwerte für einzelne Meßvorgänge dienen und den Meßvorgang beeinträchtigende Störeinflüsse reduzieren sollen.

Des weiteren ist in DE 32 18 754 ein Verfahren zur Längenmessung eines drehantreibbaren Werkzeugs offenbart. Hierbei passiert das Werkzeug eine optische Meßeinrichtung, wobei die Position des Werkzeugs bestimmt wird, wenn die Werkzeugspitze eine Meßebene der optischen Meßeinrichtung passiert. Durch einen Vergleich der gemessenen Position mit einer Soll-Position des Werkzeugs kann die Länge des Werkzeugs berechnet werden. Auf diese Weise ist es auch möglich, festzustellen, ob das Werkzeug gebrochen ist.

Bei der industriellen Anwendung dieser beschriebenen Verfahren hat sich gezeigt, daß aufgrund von Verschmutzungen, z.B. durch Kühlmittel oder Metallspäne, in den Meßbereichen der verwendeten optischen Meßsysteme fehlerhafte oder nicht zufriedenstellende Messungen auftreten. Des weiteren müssen die verwendeten optischen Meßsysteme in Abhängigkeit der verwendeten Werkzeuge sowie deren Drehzahl für den jeweiligen Anwendungsfall neu eingestellt werden. Außerdem erlaubt keines dieser bekannten Verfahren eine Kontrolle einzelner Schneiden eines Werkzeugs sowie eine vollständige Überprüfung der Geometrie eines Werkzeugs.

Aus der DE 39 05 949 A1 ist ein Meßsystem zum Prüfen einer Schneidengeometrie bekannt, bei dem Abschattungen eines Meßstrahls durch Hindernisse auf seinem Ausbreitungsweg erfaßt und ausgewertet werden. Die Berücksichtigung von Soll-Zeitpunkten und Detektions-Zeitpunkten ist dort nicht vorgesehen.

Gemäß der DE 692 23 544 T2 werden Störungen beim optischen Vermessen des Profiles eines Objektes dadurch beseitigt, daß die optische Abtastung des Objektes mittels eines Laserstrahls auf vorbestimmte Zeitintervalle eingeschränkt wird. Hierfür wird der Laserstrahl in einem Beleuchtungszeitintervall leuchten gelassen, während in einem Ausschalt-Zeitintervall der Laserstrahl ausgeschaltet ist. Hierzu synchron wird eine Ausleseeinrichtung zum Empfangen des Laserstrahls betrieben, um einen synchronen Auslese-Abtastbetrieb von Lichtempfangselementen abwechselnd zu wiederholen.

Die DD 245 481 A1 offenbart ein Verfahren und eine Anordnung zur fotoelektrischen Lagebestimmung von Kanten an rotierenden Prüflingen bezüglich deren Drehachse. Hierbei wird während einer ersten Umdrehung diejenige Drehstellung des Prüflings relativ zu einem Fotoempfänger mittels eines optischen Meßverfahrens bestimmt, in der eine vorgegebene Kante des Prüflings vom Fotoempfänger erfaßt wird. Während weiterer Umdrehungen des Prüflings werden mittels eines hochauflösenden langsamen Verfahrens nur die Fotoempfängersignale ausgewertet, die in der zuvor bestimmten Drehstellung des Prüflings erfaßt werden.

Aus US-3,900,738, US-3,817,647, JP (A) 0 221 20 45 und US-4,667,113 ist es bekannt, zum Prüfen einer Schneidengeometrie eines drehantreibbaren Werkzeuges einen zu prüfenden Bereich eines Werkzeuges, das mit einer vorgegebenen Drehzahl eingedreht wird, in einen von einem Meßstrahl definierten Meßbereich zu verfahren und Signale zu erfassen, die angeben, wann und ob der Meßstrahl auf den zu prüfenden Bereich fällt oder von diesem unterbrochen wird.

Gemäß DE 197 20 176 C1 werden zur Elimination von Störsignalen bei einer Lichtschranke auf einen Empfänger der Lichtschranke auftreffende Lichtimpulse nur während vorgegebener Zeitintervalle ausgewertet, deren Dauer an die Länge der Zeitintervalle angepaßt ist, innerhalb derer von einem Sender der Lichtschranke Lichtimpulsfolgen ausgesendet werden.

Daher ist es Aufgabe der Erfindung, bei der Prüfung eines drehantreibbaren Werkzeugs Störeinflüsse in einer Meßebene eines Meßsystems zu eliminieren.

Um eine gewünschte Bearbeitungsqualität mit einem drehantreibbaren Werkzeug zu ermöglichen, ist sicherzustellen, daß die verwendeten Werkzeuge bestimmte Eigenschaften aufweisen. Zu diesen Eigenschaften zählen unter anderem die Positionierung eines Werkzeugs in einer entsprechenden Haltevorrichtung der Werkzeugmaschine sowie die Geometrie des Werkzeugs selbst. Mit Hilfe des erfindungsgemäßen Verfahrens wird es möglich, ein drehantreibbares Werkzeug hinsichtlich seiner tatsächlichen Gestalt zu überprüfen. Hierfür wird ein zu prüfender Bereich auf dem Werkzeug festgelegt, beispielsweise der Bereich der Schneiden des Werkzeugs. Das Werkzeug wird mit einer gewünschten konstanten Drehzahl gedreht und in einen Meßbereich eingebracht, der von einem Meßstrahl definiert wird. Aufgrund der Drehung des Werkzeugs kann der Meß-' strahl auf den zu prüfenden Bereich des Werkzeugs fallen, es ist aber auch möglich, daß der Meßstrahl nicht auf den zu prüfenden Bereich fällt. Neben dieser Wechselwirkung mit dem zu prüfenden Bereich können auch Wechselwirkungen zwischen dem Meßstrahl und anderen in dem Meßbereich befindlichen Medien oder Stoffen auftreten, beispielsweise mit herabtropfender Kühlflüssigkeit oder Metallspänen. Um das Werkzeug zu prüfen, werden die Wechselwirkungen des Meßstrahls mit dem zu prüfenden Bereich detektiert. Dabei ist zu vermeiden, daß Wechselwirkungen zwischen dem Meßstrahl und den anderen Stoffen oder Medien Fehlmessungen verursachen.

Dies wird erfindungsgemäß dadurch vermieden, daß die Detektion nur während Zeitintervallen stattfindet, die Zeitpunkte umfassen, an denen zu erwarten ist, daß der zu prüfende Bereich während der Drehung in den Meßstrahl eintaucht. Unter Verwendung einer vorgegebenen Teilung, die im folgenden als Soll-Teilung bezeichnet wird, eines dem zu prüfenden Werkzeug entsprechenden Referenzwerkzeugs werden derartige Zeitpunkte ermittelt. Diese ermittelten Zeitpunkte werden im folgenden als Soll-Zeitpunkte bezeichnet. Danach wird die Detektion während gewählter Detektions-Intervalle durchgeführt, die jeweils einen Soll-Zeitpunkt umfassen, um auf der Basis von auftretenden oder nicht auftretenden optischen Wechselwirkungen zu überprüfen, ob das Werkzeug die Soll-Teilung aufweist oder beschädigt ist.

Hierbei ist es vorgesehen, daß die Detektions-Zeitintervalle so gewählt werden, daß sie sich zeitlich nicht überlappen. Des weiteren können die Detektions-Zeitintervalle so gewählt werden, daß sie den entsprechenden Soll-Zeitpunkt symmetrisch umfassen.

Werkzeuge, die als Referenzwerkzeuge für zu prüfende Werkzeuge verwendet werden, umfassen reale Werkzeuge, deren Maße den für das zu prüfende Werkzeug gewünschten Maßen entsprechen, z.B. unbeschädigte oder neue Werkzeuge, aber auch sogenannte "virtuelle Werkzeuge". Unter "virtuellen Werkzeugen sind hier nicht die Werkzeuge im eigentlichen Sinn zu verstehen, sondern die formale Beschreibung der Maße der Werkzeuggeometrie. Die formale Beschreibung kann z.B. durch mathematische Formeln und/oder Daten erfolgen. Da die Erfindung, wie weiter unten beschrieben wird, auch programmierbare Komponenten umfassen kann, ist die Verwendung "virtueller" Referenzwerkzeuge in Form von Daten zu bevorzugen, die z.B. rechnergestützt gespeichert und verarbeitet werden.

Die Größe der gewählten Detektions-Zeitintervalle ist in Abhängigkeit des jeweiligen Anwendungsfalls möglichst klein zu wählen, um die Detektion auf einen Zeitbereich zu beschränken, der möglichst kurz vor einem Soll-Zeitpunkt beginnt und möglichst kurz danach endet. Auf diese Weise wird die Zuverlässigkeit der Werkzeugprüfung erhöht. Vorzugsweise werden die Detektions-Zeitintervalle so klein gewählt, daß sie den entsprechenden Soll-Zeitpunkt nur mit geringem Zeitüberschuß enthalten.

Vorzugsweise sollen die Soll-Zeitpunkte und/oder Detektions-Zeitintervalle in Abhängigkeit von der Drehzahl des Werkzeugs bestimmt werden. Darüber hinaus ist es vorteilhaft, wenn die Soll-Zeitpunkte und/oder Detektions-Zeitintervalle unter Berücksichtigung der Soll-Teilung bestimmt werden.

In einer bevorzugten Ausführungsform der Erfindung werden die Detektionszeitpunkte, die zur Synchronisation der Detektion mit dem zu prüfenden, sich drehenden Werkzeug erforderlich sind, bestimmt, indem in Abhängigkeit der Soll-Teilung ein Soll-Zeitintervall bestimmt wird. Dieses Soll-Zeitintervall gibt den zeitlichen Abstand zwischen zwei Zeitpunkten an, an denen zu erwarten ist, daß unterschiedliche Bereiche des zu prüfenden Bereichs des Werkzeugs in den Meßstrahl eintauchen. Danach werden die Signale detektiert, die Wechselwirkungen des Meßstrahls mit Hindernissen auf seinem Ausbreitungsweg angeben, wobei das Detektieren solange durchgeführt wird, bis wenigstens zwei aufeinanderfolgende derartige Signale detektiert werden, deren zeitlicher Abstand mit dem vorbestimmten Soll-Zeitintervall übereinstimmt.

Darüber hinaus ist es möglich, das Detektieren nach einem letzten im Soll-Zeitintervall detektierten Signal zu beginnen, wobei der zeitliche Abstand der Soll-Zeitpunkte dem Soll-Zeitintervall entspricht.

Um Werkzeuge unregelmäßiger Geometrie zu prüfen, ist es möglich, in Abhängigkeit einer Soll-Teilung des Werkzeugs, die in diesem Fall eine unregelmäßige Teilung ist, eine Folge Soll-Zeitintervalle festzulegen. Nachfolgend werden die Signale, die Wechselwirkungen des Meßstrahls mit Hindernissen auf seinem Ausbreitungsweg angeben, solange detektiert, bis wenigstens zwei aufeinanderfolgende Signale detektiert werden, deren zeitlicher Abstand einem der Soll-Zeitintervalle der festgelegten Folge entspricht. Vorzugsweise wird bei den oben beschriebenen Ausführungsformen der Erfindung die zur Sychronisation verwendete Detektion kontinuierlich durchgeführt.

Somit wird es ermöglicht, das erfindungsgemäße Detektieren nach einem letzten in einem der Soll-Zeitintervalle detektierten Signale zu beginnen. Die Detektion erfolgt dann erfindungsgemäß zu den Soll-Zeitpunkten, deren zeitliche Abstände hier eine Folge haben, die der festgelegten Folge der Soll-Zeitintervalle entspricht.

Des weiteren ist zu bevorzugen, daß das zu prüfende Werkzeug in dem Meßbereich positioniert wird, indem ein Eintauchen der Hüllfläche des zu prüfenden Bereichs, die sich aus der Drehung des Werkzeugs ergibt, unter Verwendung des Meßstrahls detektiert wird.

Es ist auch möglich, in Antwort auf die erfindungsgemäße Detektion ein Ergebnissignal zu erzeugen, um ein Gesamtergebnis der Prüfung des Werkzeugs anzugeben. So ist es möglich, ein Ergebnissignal zu erzeugen, das eine erfolgreiche summarische Prüfung des Werkzeugs angibt, wenn eine Anzahl der zu den Soll-Zeitpunkten detektierten Signale über einer vorbestimmten Anzahl liegt oder die vorbestimmte Anzahl exakt erreicht.

Bei einer weiteren Ausführungsform der Erfindung wird die Bestimmung der Soll-Zeitpunkte erneut durchgeführt, wenn die Anzahl der zu den Soll-Zeitpunkten detektierten Signale unter der vorbestimmten Anzahl liegt. Ergänzend kann ein Ergebnissignal erzeugt werden, das eine nicht erfolgreiche Prüfung des Werkzeugs angibt, wenn die Anzahl der zu den Soll-Zeitpunkten detektierten Signale unter der vorbestimmten Anzahl liegt.

Zusätzlich ist es möglich, eine Detektionsdauer festzulegen, für die das Detektieren zu den Soll-Zeitpunkten durchgeführt wird.

Außerdem kann eine Bestimmungsdauer gewählt werden, die den Zeitraum angibt, in dem das Bestimmen der Soll-Zeitpunkte durchgeführt wird. So kann dann ein Ergebnissignal erzeugt werden, das eine nicht erfolgreiche summarische Prüfung des Werkzeugs angibt, wenn die Bestimmung der Soll-Zeitpunkte länger als die gewählte Bestimmungsdauer durchgeführt wird.

Die Detektionsdauer und/oder die Bestimmungsdauer können dabei in Abhängigkeit der Rotation des Werkzeugs und/oder in Abhängigkeit der Soll-Teilung bestimmt werden.

Um nicht nur einen einzelnen Bereich des Werkzeugs zu prüfen, sondern mehrere Bereiche des Werkzeugs oder das gesamte Werkzeug zu prüfen, wird nach Ablauf der Prüfung das erfindungsgemäße Verfahren wiederholt. Hierbei wird nach Abschluß der Prüfung eines Bereichs das Werkzeug relativ zu dem Meßbereich so verfahren, daß eine durch die Drehung entstehende Hüllfläche eines weiteren zu prüfenden Bereichs in den Meßbereich eintaucht bzw. in demselben liegt. Danach werden die erfindungsgemäß folgenden Prüfschritte erneut durchgeführt. Diese Vorgehensweise wird für jeden zu prüfenden Bereich wiederholt, wobei jeder weitere zu prüfende Bereich des Werkzeugs vorzugsweise dem zuvor geprüften Bereich benachbart ist.

Alternativ zu diesem Prüfen mehrerer Bereiche oder in Kombination damit können mehrere benachbarte Bereiche, größere zusammenhängende Bereiche des Werkzeugs oder das gesamte Werkzeug geprüft werden, wenn zusätzlich zur Drehung des Werkzeugs dasselbe gleichzeitig relativ zu dem Meßbereich bewegt wird, z.B. senkrecht zu dem Meßbereich, so daß eine durch die Drehung und die Relativbewegung des Werkzeugs entstehende Hüllfläche für die zu prüfenden benachbarten Bereiche bzw. des zu prüfenden zusammenhängenden Bereichs in den Meßbereich eintaucht bzw. in demselben liegt.

Zum Ausführen des erfindungsgemäßen Verfahrens wird ein Meßsystem verwendet, das einen Sender zum Aussenden eines Meßstrahls, einen Empfänger zum Empfangen des Meßstrahls und zum Ausgeben von Signalen, die einen empfangenen Meßstrahl angeben, eine mit dem Empfänger verbundene Auswerteeinheit zum Empfangen der von dem Empfänger ausgegebenen Signale und zum Erzeugen von Signalen, die Wechselwirkungen des Meßstrahls mit Hindernissen auf seinem Ausbreitungsweg angeben, in Abhängigkeit der empfangenen Signale und eine Steuereinheit zur Steuerung des Meßsystems aufweist.

In einer Ausführungsform der Erfindung wertet die Auswerteeinheit die Signale des Empfängers nur während gewählter Auswerte-Zeitintervalle aus, in denen Soll-Zeitpunkte liegen, an denen ein dem zu prüfenden Bereich entsprechender Bereich eines eine Soll-Teilung aufweisenden Referenzwerkzeugs in den Meßstrahl eintaucht.

Bei einer anderen Ausführungsform empfängt der Empfänger den Meßstrahl nur während gewählter Empfangs-Zeitintervalle, in denen jeweils nur ein Soll-Zeitpunkt liegt, an dem ein dem zu prüfenden Bereich entsprechender Bereich eines eine Soll-Teilung aufweisenden Referenzwerkzeugs in den Meßstrahl eintaucht.

Bei einer weiteren Ausführungsform sendet der Sender den Meßstrahl nur während gewählter Sende-Zeitintervalle aus, in denen jeweils ein Soll-Zeitpunkt liegt, an dem ein dem zu prüfenden Bereich entsprechender Bereich eines eine Soll-Teilung aufweisenden Referenzwerkzeugs in den Meßstrahl eintaucht.

Weitere Ausführungsformen der Erfindung ergeben sich als Kombinationen einzelner oder mehrerer der oben genannten Ausführungsformen des erfindungsgemäßen Meßsystems.

Um eine kompakte Bauform zu erzielen, können die Steuereinheit und/oder die Auswerteeinheit in dem Sender und/oder dem Empfänger integriert werden.

Um das erfindungsgemäße Meßsystem flexibel einsetzen zu können, sollte die Auswerteeinheit und/oder die Steuereinheit programmierbar sein.

Außerdem ist es wünschenswert, das Meßsystem bzw. vorzugsweise die Steuereinheit mit einer das zu prüfenden Werkzeug drehenden Maschine bzw. deren Steuerung zu verbinden, um z.B. Informationen über die Drehzahl, Form des Werkzeugs, gewünschte Bearbeitungsvorgänge und deren Genauigkeit sowie mit dem erfindungsgemäßen Meßsystem durchgeführten Prüfungen des Werkzeugs auszutauschen.

Der Meßstrahl kann ein beliebiger Strahl sein, der in Wechselwirkung mit einem zu prüfenden Werkzeug und mit anderen Hindernissen auf seinem Ausbreitungsweg treten kann und der eine Detektion der Wechselwirkungen mit einem entsprechenden Empfänger oder Detektor ermöglicht. So kann der Meßstrahl ein optischer Meßstrahl, ein elektro-magnetischer Meßstrahl, ein Korpuskel-Meßstrahl oder eine Kombination dieser Meßstrahlen sein. Angesichts der verfügbaren Komponenten, die zum Erzeugen, Aussenden und Detektieren von Meßstrahlen erforderlich sind, sowie deren Komplexität und Kosten, ist der Meßstrahl vorzugsweise ein optischer Meßstrahl und insbesondere ein Laserlichtstrahl.

Da bei dem erfindungsgemäßen Verfahren die Prüfung des Werkzeugs im wesentlichen an den sogenannten Soll-Zeitpunkten stattfindet, an denen zu erwarten ist, daß der zu prüfende Bereich des Werkzeugs in den Meßstrahl eintaucht, werden Fehlmessungen vermieden, die auf Wechselwirkung zurückzuführen sind, die keine Wechselwirkungen des Meßstrahls mit dem zu prüfenden Bereich sind. Des weiteren ermöglicht es die Erfindung durch die Verwendung programmierbarer Steuer- und Auswerteeinheiten, die Prüfung eines Werkzeugs einer Werkzeugmaschine anwendungsspezifisch auf das jeweilig verwendete Werkzeug und die jeweilig verwendete Werkzeugmaschine flexibel anzupassen. So können Werkzeuge geprüft werden, die sich mit unterschiedlichen Drehzahlen drehen und die verschiedenste, auch unregelmäßige Geometrien und Teilungen aufweisen.

Ausführungsbeispiele der Erfindung werden im folgenden anhand schematischer Zeichnungen mit weiteren Einzelheiten erläutert.
Es zeigen:
- Fig. 1: eine Anordnung des erfindungsgemäßen Meßsystems und einem zu prüfenden Werkzeug in einer Spindel einer Werkzeugmaschine vor dem erfindungsgemäßen Prüfen,
- Fig. 2: die Anordnung aus Fig. 1 während der erfindungsgemäßen Prüfung des Werkzeugs,
- Fig. 3: einen Querschnitt eines zu prüfenden Werkzeugs quer zu dessen Längsachse, wobei der Querschnitt dem zu prüfenden Bereich des Werkzeugs entspricht,
- Fig. 4: eine Aufsicht auf das erfindungsgemäße Meßsystem und den zu prüfenden Bereich des Werkzeugs aus Fig. 3 vor einem Eintauchen in einen Meßbereich,
- Fig. 5: eine schematische Aufsicht auf das erfindungsgemäße Meßsystem und den zu prüfenden Bereich des Werkzeugs aus Fig. 3 bei dem Eintauchen in den Meßbereich,
- Fig. 6: eine schematische Darstellung der Position des Werkzeugs relativ zu dem Meßstrahl in Abhängigkeit von der Lage des Prüfbereichs auf dem Werkzeugs,
- Fig. 7: einen Signalverlauf von erfindungsgemäß detektierten Signalen und die dazugehörigen Positionen eines Werkzeugs mit regelmäßiger Querschnittsgeometrie in der erfindungsgemäßen Meßanordnung,
- Fig. 8: einen Signalverlauf von erfindungsgemäß detektierten Signalen sowie die entsprechenden Positionen eines Werkzeugs mit unregelmäßiger Querschnittsgeometrie in dem erfindungsgemäßen Meßsystem,
- Fig. 9: einen Signalverlauf von erfindungsgemäß detektierten Signalen und die dazugehörigen Positionen eines fehlerhaften Werkzeugs mit regelmäßiger Querschnittsgeometrie in der erfindungsgemäßen Meßanordnung, und
- Fig. 10: einen Signalverlauf von erfindungsgemäß detektierten Signalen sowie die entsprechenden Positionen eines fehlerhaften Werkzeugs mit unregelmäßiger Querschnittsgeometrie in dem erfindungsgemäßen Meßsystem.

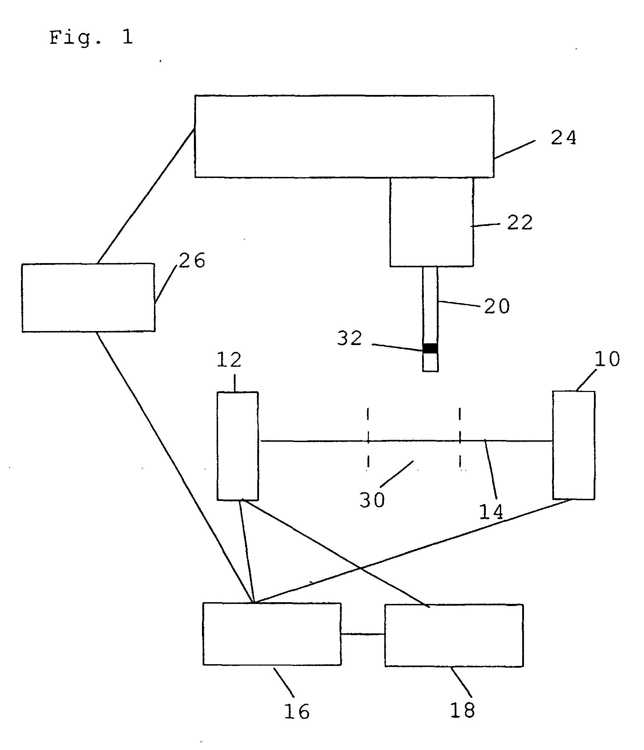

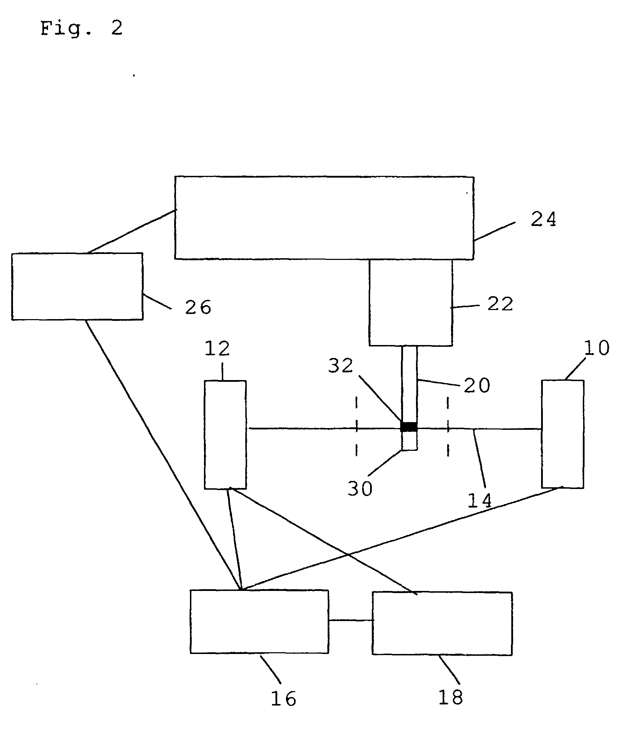

Die in Fig. 1 und 2 vereinfachte Darstellung einer erfindungsgemäßen Anordnung umfaßt im wesentlichen ein Meßsystem 10, 12, 14, 16, 18 und eine Werkzeugmaschine, von der lediglich ein zu prüfendes Werkzeug 20, eine das Werkzeug 20 haltende Spindel 22, ein die Spindel 22 antreibender Spindelmotor 24 und eine Steuerung 26 gezeigt sind. Das Meßsystem umfaßt einen Sender 10, einen Empfänger 12, der einen vom Sender 10 ausgesendeten Meßstrahl 14 empfängt, sowie eine Steuereinheit 16 und eine Auswerteeinheit 18, die mit dem Sender 10 und dem Empfänger 12 verbunden sind.

Der hier verwendete Meßstrahl 14 ist ein Laserlichtstrahl, es ist aber auch möglich, jeden zum Messen geeigneten optischen Strahl, elektromagnetische Meßstrahlen, Korpuskel-Meßstrahlen oder Kombinationen dieser Meßstrahlen zu verwenden.

Der Bereich des Meßstrahls 14 zwischen dem Sender 10 und dem Empfänger 12 entspricht dem Bereich des Meßsystems, in dem eine Prüfung eines Werkzeugs durchgeführt wird. In Abhängigkeit der Abmessungen zu prüfender Werkzeuge ist der Abstand zwischen dem Sender 10 und dem Empfänger 12 möglichst klein zu halten, um Störungen bei der Messung zu vermeiden.

Auf dem zu prüfenden Werkzeug 20 wird ein Prüfbereich 32 festgelegt. Die Lage und Abmessungen des Prüfbereichs 32 hängen von der jeweiligen Werkzeuggeometrie und von mit diesem Werkzeug durchgeführten Bearbeitungsschritten ab. Zur Durchführung des Verfahrens ist es notwendig, daß der Prüfbereich 32 in den Meßbereich 30 eintaucht. Hierzu wird das Werkzeug 20 aus einer Position, in der sich der Prüfbereich 32 außerhalb des Meßbereichs 30 befindet, wie in Fig. 1 dargestellt ist, in eine Position verfahren, in der der Prüfbereich 32 in dem Meßbereich 30 liegt, wie in Fig. 2 zu sehen ist. In den Fig. 1 und 2 wird das Werkzeug 20 und somit der Prüfbereich 32 in einer parallel zur Längsachse des Werkzeugs 20 verlaufenden Richtung verfahren, so daß der Prüfbereich 32 in den Meßbereich 30 eintaucht. In Abhängigkeit von der Werkzeugmaschine, die ein zu prüfendes Werkzeug trägt, der Anordnung des Meßsystems in der Werkzeugmaschine, der Art des zu prüfenden Werkzeugs und der Lage und Abmessung eines festgelegten Prüfbereichs ist die Art der Bewegung des zu prüfenden Werkzeugs für jeden Anwendungsfall zu definieren. Die Art der Bewegung des Werkzeugs 20 spielt bei der Ausführung des Prüfverfahrens keine Rolle, es ist nur zu gewährleisten, daß der Prüfbereich 32 in den Meßbereich 30 eintaucht.

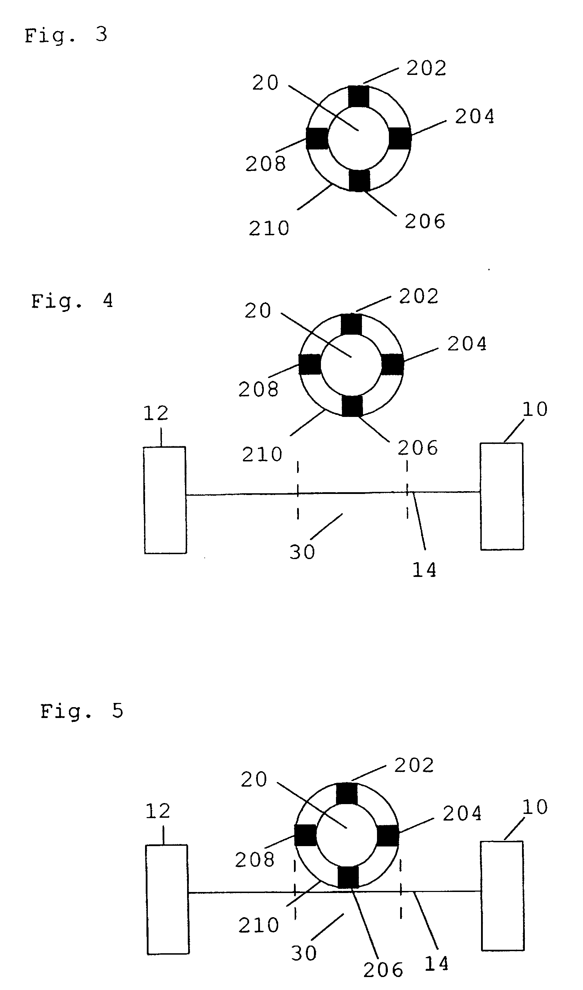

In Fig. 3 ist eine vereinfachte Darstellung einer Querschnittsansicht auf den Prüfbereich 32 des Werkzeugs 20 gezeigt. In diesem Fall weist das Werkzeug 20 vier Schneiden 202, 204, 206, 208 auf, die überprüft werden sollen. Zur Durchführung des Verfahrens ist es notwendig, daß das Werkzeug 20 mit einer gewünschten, konstanten Drehzahl gedreht wird, bevor und/oder während der Prüfbereich 32 in den Meßbereich 30 eintaucht, und sich der Prüfbereich 32 in dem Meßbereich 30 befindet. Aufgrund der Drehung des Werkzeugs 20 entsteht eine den Prüfbereich 32 umhüllende Hüllfläche 210. Die Bewegung des Werkzeugs 20 aus einer Position, in der der Prüfbereich 32 außerhalb des Meßbereichs 30 liegt, wie in Fig. 4 gezeigt ist, wird beendet, sobald die Hüllfläche 210 in den Meßbereich eintaucht, wie in Fig. 5 gezeigt ist. Vorzugsweise wird der Meßstrahl 14 verwendet, um das Eintauchen der Hüllfläche 210 in den Meßbereich 30 zu detektieren. Es ist beispielsweise aber auch möglich, das Eintauchen der Hüllfläche 210 in den Meßbereich 30 aus der relativen Lage des Werkzeugs 20 zu dem Meßstrahl 14 zu ermitteln. Wird der Meßstrahl 14 zur Detektion des Eintauchens der Hüllfläche 210 in den Meßbereich 30 verwendet, wird Meßstrahl 14 blockiert, sobald eine der Schneiden 202, 204, 206, 208 in den Meßbereich 30 eintaucht, so daß der Empfänger 12 den Meßstrahl 14 nicht mehr empfängt. Der Empfänger 12 detektiert die Unterbrechung des Meßstrahls 14 und erzeugt ein Signal, das diese Unterbrechung angibt.

Vorzugsweise gibt der Empfänger 12 in diesem Fall ein impulsartiges Signal ab, aber es ist jedes bekannte Signal verwendbar, das eine Unterbrechung des Meßstrahls 14 angibt. Dieses Signal wird von dem Empfänger 12 entweder direkt an die Steuereinheit 16 des Meßsystems oder über die Auswerteeinheit 18 an diese weitergegeben.

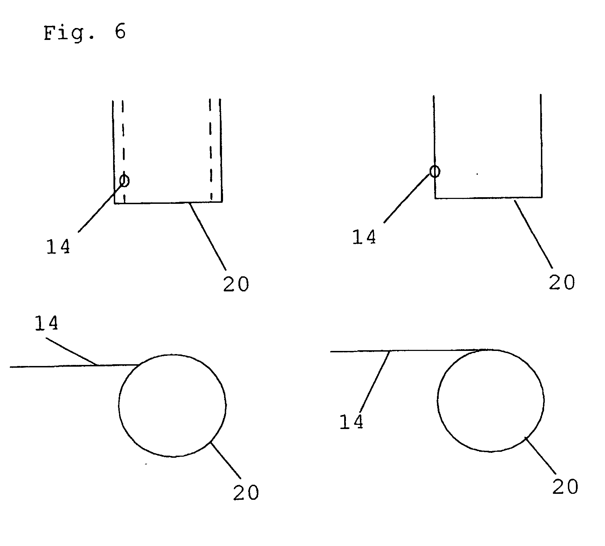

Die Steuereinheit 16 gibt dann ein Signal an die Steuerung 26 der Werkzeugmaschine aus. In Anwort auf dieses Signal beendet die Steuerung 26 die Verfahrbewegung des Werkzeugs 20. Liegt der zu prüfende Bereich 32 des Werkzeugs 20 auf einer äußeren Oberfläche desselben, wird die Verfahrbewegung unmittelbar nach Erhalt des von der Steuereinheit 16 ausgegebenen Signals beendet. Im Gegensatz dazu wird die Verfahrbewegung nach Erhalt des von der Steuereinheit 16 ausgegebenen Signals erst nach einer vorbestimmten Zeitdauer oder einer vorbestimmten zusätzlichen Wegstrecke beendet, wenn der Prüfbereich 32 des Werkzeugs 20 nicht auf einer äußeren Oberfläche desselben, sondern "im" Werkzeug liegt. Die resultierenden Positionen des Werkzeugs 20 relativ zu dem Meßbereich 30 bzw. dem Meßstrahl 14 für diese unterschiedlichen Fälle sind in Fig. 6 skizziert.

Aufgrund der Drehung des Werkzeugs 20 tauchen die Schneiden 202, 204, 206, 208 nacheinander in den Meßbereich 30 ein und unterbrechen dabei den Meßstrahl 14. Der zeitliche Abstand der Unterbrechungen des Meßstrahls 14 durch die Schneiden 202, 204, 206, 208 ist hier gleich und konstant, da sich das Werkzeug 20 mit einer konstanten Drehzahl dreht und der Abstand zwischen den Schneiden 202, 204, 206, 208 gleich ist.

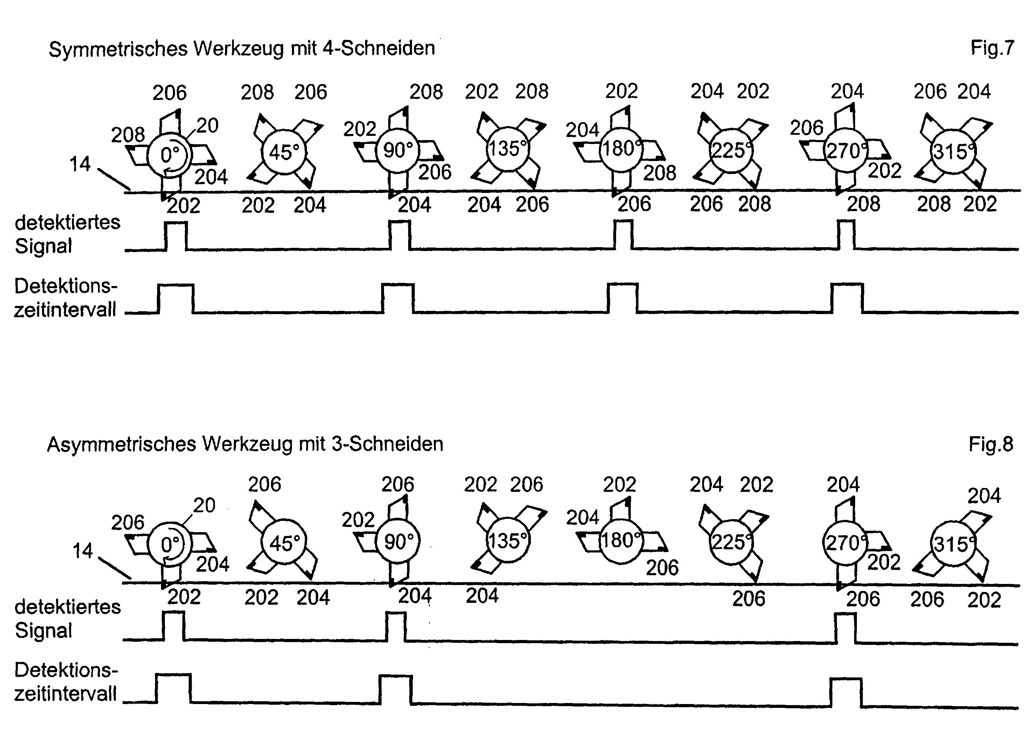

Diese Art der Unterbrechung des Meßstrahls 14 führt dazu, daß der Empfänger 12 Signale, wie sie beispielhaft in Fig. 7 dargestellt sind, abgibt. In Fig. 7 ist der von dem Empfänger 12 erzeugte Signalverlauf sowie die entsprechenden Positionen des Werkzeugs 20 in dem Meßbereich 30, genauer die relative Lage der Schneiden 202, 204, 206, 208 zu dem Meßstrahl 14, gezeigt. Eine Beschädigung oder ein vollständiges Fehlen einer der Schneiden würde dazu führen, daß der Empfänger 12 an einem Zeitpunkt, einem sogenannten Soll-Zeitpunkt, an dem zu erwarten ist, daß eine Schneide den Meßstrahl unterbricht, kein Signal erzeugt, da die beschädigte oder fehlende Schneide keine Unterbrechung des Meßstrahls 14 verursacht.

Demgegenüber würde der Empfänger 12 auch ein Signal erzeugen, wenn die Unterbrechung des Meßstrahls 14 nicht auf eine Unterbrechung durch eine der Schneiden zurückzuführen ist, sondern andere Gründe hat. Dies ist der Fall, wenn beispielsweise Kühlflüssigkeit oder Späne in den Meßbereich 30 eintauchen und den Meßstrahl 14 unterbrechen. Die Auswertung eines solchen Signals kann zu Fehlmessungen und somit zu einer fehlerhaften Überprüfung des Werkzeugs 20 führen.

Um einerseits diese Art von Fehlmessungen zu vermeiden und um andererseits die Schneiden 202, 204, 206, 208 zu überprüfen, werden die von dem Empfänger 12 erzeugten und an die Auswerteeinheit 18 weitergeleiteten Signale nur während gewählter Detektions-Zeitintervalle ausgewertet, die jeweils einen Soll-Zeitpunkt umfassen, an dem zu erwarten ist, daß eine der Schneiden 202, 204, 206, 208 den Meßstrahl 14 unterbricht. Hierbei werden Detektions-Zeitintervalle verwendet, die sich zeitlich nicht überschneiden und den jeweiligen Soll-Zeitpunkt mit nur geringem zeitlichen Überschuß symmetrisch umfassen.

Detektiert die Auswerteeinheit 18 ein Fehlen eines Signals während dieser Detektions-Zeitintervalle, kann daraus geschlossen werden, daß eine der Schneiden 202, 204, 206, 208 fehlt oder beschädigt ist, d.h. Abmessungen hat, die nicht den erforderlichen Abmessungen entsprechen.

Die vorgehensweise bei der Auswertung der von dem Empfänger 12 erzeugten Signale vermeidet die oben beschriebenen Fehlmessungen, da Signale nicht erfaßt und ausgewertet werden, die nicht auf eine Unterbrechung des Meßstrahls 14 durch eine der Schneiden 202, 204, 206, 208 zurückzuführen sind, da sie außerhalb der Detektions-Zeitintervalle liegen und somit auch nicht durch das Werkzeug verursacht werden können.

Das Verfahren eignet sich auch zur Prüfung unregelmäßig gestalteter Werkzeuge. Weist das zu prüfende Werkzeug 20 beispielsweise unregelmäßig beabstandete Schneiden 202, 204, 206 auf, wie in Fig. 8 zu sehen ist, erzeugt der Empfänger 12 Signale, deren zeitliche Abstände unterschiedlich sind. Ein solcher unregelmäßiger, als beispielhaft zu verstehender Signalverlauf ist in Fig. 8 gezeigt. Auch in diesem Fall werden von der Auswerteeinheit 18 Signale des Empfängers 12 nur während der Detektions-Zeitintervalle ausgewertet, die jeweils einen Soll-Zeitpunkt umfassen, an dem zu erwarten ist, daß eine der Schneiden 202, 204, 206 den Meßstrahl 14 unterbricht.

Zur Durchführung des Prüfverfahrens ist es daher notwendig, die Auswertung der Signale des Empfängers 12 synchronisiert mit der Drehung des Werkzeugs 20 und in Abhängigkeit der Werkzeuggeometrie durchzufuhren. Hierfür erhält die Steuereinheit 16 z.B. von der Steuerung 26 der Werkzeugmaschine Informationen, die die Drehzahl und die Gestalt (z.B. Teilung) des aktuell verwendeten Werkzeugs betreffen. Alternativ dazu greift Steuereinheit 16 auf die Gestalt (z.B. Teilung) des aktuell verwendeten Werkzeugs betreffende Daten zu, die in der Steuereinheit 16 einprogrammiert oder in einem nicht gezeigten Speicher gespeichert sind. Hierbei können die Informationen, die die Drehzahl des Werkzeugs betreffen, von Steuerung 26 an die Steuereinheit 16 übermittelt werden. Um einen möglichst einfachen Aufbau der Prüfvorrichtung zu ermöglichen, ist es auch möglich, das Werkzeug 20 bei der Prüfung mit einer zuvor definierten konstanten Drehzahl zu drehen, wobei Daten, die diese Drehzahl angeben, in der Steuereinheit 16 einprogrammiert sind oder in dem nicht gezeigten Speicher zum Zugriff durch die Steuereinheit 16 gespeichert sind. Dadurch entfällt die Notwendigkeit, Informationen hinsichtlich der Drehzahl des Werkzeugs und/oder der Gestalt (z.B. Teilung) des aktuell verwendeten Werkzeugs an die Steuereinheit 16 zu übermitteln.

Aus diesen Informationen errechnet die Steuereinheit 16 die Soll-Zeitpunkte, an denen das Werkzeug 20 den Meßstrahl 14 unterbricht, wenn es die gewünschte Teilung, d.h. die Soll-Teilung, aufweist. Die Steuereinheit 16 steuert nun die Auswerteeinheit 18 so, daß sie nur Signale des Empfängers 12 während der Detektions-Zeitintervalle auswertet. Um zu gewährleisten, daß die Auswerteintervalle der Auswerteeinheit 18 die Zeitpunkte umfassen, an denen gewünschte Unterbrechungen des Meßstrahls 14 aufgrund der Drehung des Werkzeugs 20 auftreten sollen, muß das Meßsystem mit der Drehung des Werkzeugs 20 synchronisiert werden. Im folgenden wird die hier gewählte Synchronisation beschrieben.

Bei der Synchronisation der Auswerteeinheit 18 mit dem sich drehenden Werkzeug 20 werden in einem dem eigentlichen Meßvorgang vorgelagerten Schritt alle vom Empfänger 12 erzeugten Signale von der Auswerteeinheit 18 wie im folgenden erläutert ausgewertet. Alle von dem Empfänger 12 erhaltenen Signale werden von der Auswerteeinheit 18 hinsichtlich ihres zeitlichen Abstandes zueinander ausgewertet. Aufgrund der z.B. von der Steuereinheit 16 erhaltenen Informationen sind der Auswerteeinheit 18 die Abstände zwischen den Zeitpunkten bekannt, an denen der Empfänger 12 aufgrund einer gewünschten Unterbrechung des Meßstrahls 14 ein Signal erzeugen sollte. Diese im folgenden als Soll-Zeitintervalle bezeichneten Zeitabstände können in Abhängigkeit der Geometrie des zu prüfenden Werkzeugs 20 gleich sein oder aus einer Folge unterschiedlicher Soll-Zeitintervalle bestehen. Die Auswerteeinheit 18 vergleicht nun die Zeitabstände aller von dem Empfänger 12 erhaltenen Signale mit dem Soll-Zeitintervall oder den Soll-Zeitintervallen.

Werden zwei Signale detektiert, deren zeitlicher Abstand einem Soll-Zeitintervall entspricht, kann daraus geschlossen werden, daß die zu diesen Impulsen führende Unterbrechung des Meßstrahls 14 auf eine der Schneiden 202, 204, 206, 208 zurückzuführen ist. Um hierbei Fehler zu vermeiden, ist es zu bevorzugen, den Synchronisationsvorgang erst zu beenden, wenn mehr als zwei aufeinanderfolgende Signale detektiert wurden, deren jeweiliger zeitlicher Abstand dem Soll-Zeitintervall entspricht.

Wird im Falle einer unregelmäßigen Soll-Teilung eine Folge unterschiedlicher Soll-Zeitintervalle zum Vergleich verwendet, wird der Synchronisationsvorgang bevorzugterweise beendet, wenn die zeitlichen Abstände mehrerer aufeinanderfolgender Signale eine Folge aufweisen, die dieser gewünschten Folge entspricht. Die Prüfsicherheit kann hier dadurch erhöht werden, daß der Synchronisationsvorgang erst beendet wird, wenn wenigstens drei aufeinanderfolgende Signale detektiert werden, deren Folge zeitlicher Abstände zueinander einem Teil der Folge der Soll-Zeitintervalle entspricht.

Nachdem bei den oben beschriebenen Synchronisationabläufen das letzte Signal des Empfängers 12 in einem Soll-Zeitintervall detektiert wurde, wird der eigentliche Prüfvorgang in einem zeitlichen Abstand begonnen, der gewährleistet, daß die Detektions-Zeitintervalle alle Soll-Zeitpunkte umfassen.

Die Größen der Detektions-Zeitintervalle sind so zu dimensionieren, daß einerseits kein Signal des Empfängers 12 verloren geht, der auf eine gewünschte Unterbrechung des Meßstrahls 14 zurückzuführen ist, und andererseits Signale nicht ausgewertet werden, die auf unerwünschte Unterbrechungen des Meßstrahls 14 zurückzuführen sind. So ist bei der Dimensionierung der Detektions-Zeitintervalle unter anderem die Drehzahl des Werkzeugs 20, dessen Geometrie (z.B. Teilung) und eine gewünschte Qualität eines mit dem Werkzeug 20 durchzuführenden Bearbeitungsvorgangs vorzunehmen. Idealerweise werden die Detektions-Zeitintervalle so klein gewählt, daß sie die Soll-Zeitpunkte mit nur geringem Zeitüberschuß enthalten. Dies erfordert aber eine exakte und aufwendige Steuerung des Meßsystems, um keine Fehlmessungen zu erhalten. Daher sind die Größen der Detektions-Zeitintervalle in Abhängigkeit des jeweiligen Anwendungsfalls zu wählen.

Die Auswerteeinheit 18 führt die Detektion von Impulsen des Empfängers 12 während der Detektions-Zeitintervalle für eine festzulegende Detektionsdauer durch. Um zu gewährleisten, daß alle Schneiden 202, 204, 206, 208 des Werkzeugs 20 überprüft werden, sollte die Detektionsdauer so gewählt werden, daß jede der Schneiden 202, 204, 206, 208 wenigstens einmal in den Meßbereich eintaucht. Das heißt, die Detektionsdauer sollte wenigstens der Dauer einer vollständigen Umdrehung des Werkzeugs 20 entsprechen. Eine erhöhte Zuverlässigkeit des erfindungsgemäßen Verfahrens kann erreicht werden, wenn eine längere Detektionsdauer gewählt wird, d.h. das Werkzeug für mehr als eine Umdrehung überprüft wird. Dabei ist zu berücksichtigen, daß bei der Wahl der Prüfdauer der eigentliche Betrieb der Werkzeugmaschine nicht wesentlich verlängert wird.

Detektiert die Auswerteeinheit 18 während der Detektionsdauer eine Anzahl von Signalen des Empfängers 12, die unter einer vorbestimmten Anzahl liegt, kann darauf geschlossen werden, daß eine der Schneiden 202, 204, 206, 208 fehlt oder beschädigt ist. Diese vorbestimmte Anzahl ist in Abhängigkeit der Detektionsdauer, der Geometrie bzw. Teilung des Werkzeugs 20, einer gewünschten Qualität und Zuverlässigkeit des Meßverfahrens und anderer Faktoren festzulegen, die den Meßvorgang beeinflussen. Wird eine Anzahl von Signalen des Empfängers 12 detektiert, die größer als die vorbestimmte Anzahl oder gleich groß ist, gibt die Auswerteeinheit 18 ein Signal aus, das angibt, daß die gesamte Prüfung des Werkzeugs erfolgreich war. Liegt die Anzahl der erfaßten Signale unter der vorbestimmten Anzahl, gibt die Auswerteeinheit 18 ein Signal aus, das eine fehlgeschlagene Gesamtprüfung angibt.

Um den Prüfvorgang möglichst kurz zu gestalten, ist die Detektionsdauer so zu wählen, daß sie der Dauer einer vollständigen Umdrehung des Werkzeugs 20 entspricht. In diesem Fall kann darauf geschlossen werden, daß das Werkzeug 20 nicht beschädigt ist bzw. die gewünschte Geometrie aufweist, wenn die Anzahl der detektierten Signale der Anzahl der Schneiden entspricht. D.h. bei dem in Fig. 7 dargestellten Fall ist die Prüfung des Werkzeugs 20 erfolgreich, wenn vier Signale detektiert werden, während bei dem in Fig. 8 dargestellten Fall die Prüfung des Werkzeugs 20 erfolgreich ist, wenn drei Signale detektiert werden.

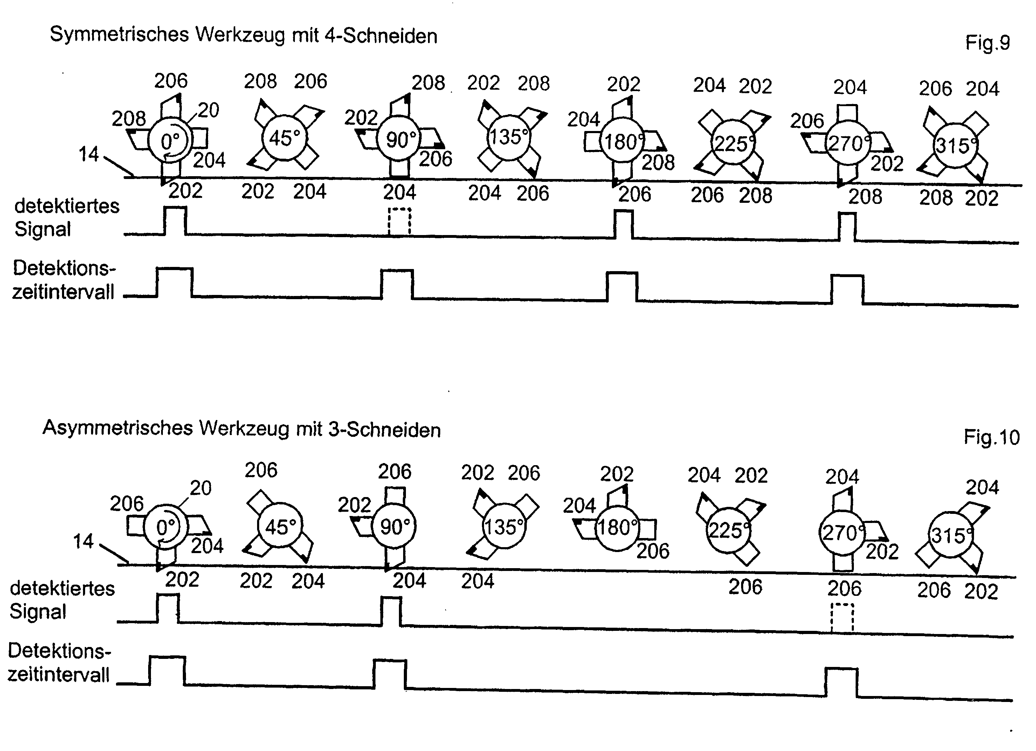

Werden bei dem in Fig. 7 dargestellten Fall weniger als vier Signale und dem in Fig. 8 dargestellten Fall weniger als drei Signale detektiert, ist die jeweilige Werkzeugprüfung fehlgeschlagen, d.h. eine der Schneiden fehlt oder ist beschädigt, wie dies in Figur 9 für die Schneide 204 und in Figur 10 für die Schneide 206 gezeigt ist. Somit werden zu den Zeitpunkten, die den jeweiligen Soll-Zeitpunkten für die fehlenden oder fehlerhaften Schneiden, nämlich den Schneiden 204 und 206 aus Fig. 9 bzw. 10, entsprechen, keine Signale detektiert, die eine Wechselwirkung des Meßstrahls 14 mit dem zu prüfenden Bereich 32 angeben. Der Verlauf der hier detektierten Signale ist ebenfalls in den Fig. 9 und 10 skizziert, wobei die zu den Soll-Zeitpunkten erwarteten, aber nicht detektierten Signale gestrichelt dargestellt sind.

In der bisherigen Beschreibung wurde das Detektieren während der Detektions-Zeitintervalle durchgeführt, indem die Auswerteeinheit 18 Signale des Empfängers 12 nur während der die Soll-Zeitpunkte umfassenden Detektions-Zeitintervalle auswertet. Das Detektieren kann aber auch dadurch erreicht werden, indem der Sender 10 den Meßstrahl 14 nur während der die Soll-Zeitpunkte umfassenden Detektions-Zeitintervalle aussendet. Dies wird ebenfalls erreicht, wenn der Empfänger 12 den Meßstrahl 14 nur während der die Soll-Zeitpunkte umfassenden Detektions-Zeitintervalle detektiert. Die Überprüfung eines Werkzeugs kann unter Verwendung einer beliebigen Kombination dieser drei, zuletzt genannten Ausführungsformen durchgeführt werden.

Um einen möglichst flexiblen und anwendungsspezifischen Einsatz der Erfindung zu ermöglichen, ist es zu bevorzugen, daß die Steuereinheit 16 und/oder die Auswerteeinheit 18 programmierbare Einheiten umfassen. Unter Verwendung der programmierbaren Einheiten wird es möglich, das erfindungsgemäße Meßsystem auf die jeweilige verwendete Werkzeugmaschine, die verschiedenen zu prüfenden Werkzeuge und unterschiedlichste Prüfbedingungen anzupassen, ohne dabei das Meßsystem in seinem strukturellen Aufbau ändern zu müssen. Die programmierbaren Einheiten können z.B. aus Mikroprozessoren bestehen, die in der Steuereinheit 16 und/oder der Auswerteeinheit 18 integriert sind, in Form eines Rechnersystems zur Verfügung gestellt werden, das mit der Steuereinheit 16 und/oder der Auswerteeinheit 18 verbunden ist, oder durch beliebige Kombinationen davon gebildet werden.

## Patentansprüche

1. Verfahren zum Prüfen einer Schneidengeometrie eines drehantreibbaren Werkzeugs, mit einem Meßsystem (10-18), mit folgenden Schritten:
- Festlegen eines zu prüfenden Bereichs auf dem Werkzeug (20),
- Drehen des Werkzeugs (20) mit einer gewählten, konstanten Drehzahl,
- Aussenden eines Messstrahls (14), der einen Meßbereich (30) festlegt,
- Positionieren des Werkzeugs (20), so daß eine durch die Drehung entstehende Hüllfläche seines zu prüfenden Bereichs (32) in den Meßbereich (30) eintaucht, und
- Detektieren von Signalen, die Wechselwirkungen des Meßstrahls (14) mit Hindernissen auf seinem Ausbreitungsweg angeben,
**dadurch gekennzeichnet, daß**
- Soll-Zeitpunkte bestimmt werden, an denen ein dem zu prüfenden Bereich (32) entsprechender Bereich eines eine Soll-Teilung aufweisenden Referenzwerkzeugs während der Drehung in den Meßbereich (30) eintaucht,
- das Meßsystem (10-18) anhand der Folge detektierter Signale mit der Drehung des Werkzeugs (20) synchronisiert wird, und
- das Detektieren nachfolgend nur während gewählter Detektions-Zeitintervalle durchgeführt wird, die jeweils einen Soll-Zeitpunkt umfassen.

2. Verfahren nach Anspruch 1,
**dadurch gekennzeichnet, daß** die Detektions-Zeitintervalle so gewählt werden, daß sie sich nicht zeitlich überschneiden.

3. Verfahren nach Anspruch 1 oder 2,
**dadurch gekennzeichnet, daß** die Detektions-Zeitintervalle so gewählt werden, daß sie jeweils den entsprechenden Soll-Zeitpunkt symmetrisch umfassen.

4. Verfahren nach einem der Ansprüche 1 bis 3,
**dadurch gekennzeichnet, daß** die Detektions-Zeitintervalle so gewählt werden, daß sie kurz vor dem entsprechenden Soll-Zeitpunkt beginnen und kurz nach dem entsprechenden Zeitintervall enden.

5. Verfahren nach einem der Ansprüche 1 bis 4,
**dadurch gekennzeichnet, daß** die Soll-Zeitpunkte und/oder die Detektions-Zeitintervalle in Abhängigkeit von der Drehzahl des Werkzeugs (20) bestimmt werden.

6. Verfahren nach einem der Ansprüche 1 bis 5,
**dadurch gekennzeichnet, daß** die Soll-Zeitpunkte und/oder die Detektions-Zeitintervalle in Abhängigkeit von der Soll-Teilung bestimmt werden.

7. Verfahren nach einem der Ansprüche 1 bis 6,
**dadurch gekennzeichnet, daß** das Bestimmen der Soll-Zeitpunkte folgende Schritte umfaßt:
- Bestimmen eines Soll-Zeitintervalls in Abhängigkeit von der Soll-Teilung des Werkzeugs (20) und der gewählten Drehzahl, und
- Detektieren der Signale, die Wechselwirkungen des Meßstrahls (14) mit Hindernissen auf seinem Ausbreitungsweg angeben, wobei das Detektieren solange durchgeführt wird, bis wenigstens zwei auf-einanderfolgende Signale detektiert werden, deren zeitlicher Abstand mit dem Soll-Zeitintervall übereinstimmt.

8. Verfahren nach Anspruch 7,
**dadurch gekennzeichnet, daß**
- der zeitliche Abstand der Soll-Zeitpunkte dem Soll-Zeitintervall entspricht, und
- das Detektieren während der Detektions-Zeitintervalle nach einem letzten im Soll-Zeitintervall detektierten Signal begonnen wird.

9. Verfahren nach einem der Ansprüche 1 bis 6,
**dadurch gekennzeichnet, daß** das Bestimmen der Soll-Zeitpunkte folgende Schritte umfaßt:
- Festlegen einer Folge von Soll-Zeitintervallen in Abhängigkeit von der Soll-Teilung des Werkzeugs (20), die wenigstens zwei festgelegte Soll-Zeitintervalle umfaßt, und
- Detektieren der Signale, die Wechselwirkungen des Meßstrahls (14) mit Hindernissen auf seinem Ausbreitungsweg angeben, wobei das Detektieren solange durchgeführt wird, bis wenigstens zwei aufeinanderfolgende Signale detektiert werden, deren zeitlicher Abstand einem der Soll-Zeitintervalle entspricht.

10. Verfahren nach einem der Ansprüche 7 bis 9,
**dadurch gekennzeichnet, daß** das Detektieren von Signalen zum Synchronisieren des Meßsystems (10-18) kontinuierlich durchgeführt wird.

11. Verfahren nach Anspruch 9 oder 10,
**dadurch gekennzeichnet, daß**
- eine Folge der zeitlichen Abstände der Soll-Zeitpunkte der festgelegten Folge von Soll-Zeitintervallen entspricht und
- das Detektieren während der Detektions-Zeitintervalle nach dem letzten der in einem der Soll-Zeitintervalle detektierten Signale begonnen wird.

12. Verfahren nach einem der Ansprüche 1 bis 11,
**dadurch gekennzeichnet, daß** das Eintauchen der Hüllfläche des zu prüfenden Bereichs (32) in den Meßbereich (30) unter Verwendung des Meßstrahls (14) detektiert wird.

13. Verfahren nach einem der Ansprüche 1 bis 12,
**dadurch gekennzeichnet, daß** in Antwort auf die detektierten Signale ein Ergebnissignal erzeugt wird, das ein summarisches Ergebnis der Prüfung der Schneidengeometrie angibt.

14. Verfahren nach Anspruch 13,
**dadurch gekennzeichnet, daß** ein Ergebnissignal erzeugt wird, das eine erfolgreiche summarische Prüfung der Schneidengeometrie angibt, wenn eine Anzahl der während der Detektions-Zeitintervalle detektierten Signale über einer vorbestimmten Anzahl liegt oder der vorbestimmten Anzahl entspricht.

15. Verfahren nach Anspruch 13,
**dadurch gekennzeichnet, daß** die Bestimmung der Soll-Zeitpunkte und das Detektieren erneut durchgeführt wird, wenn die Anzahl der während der Detektions-Zeitintervalle detektierten Signale unter der vorbestimmten Anzahl liegt.

16. Verfahren nach einem der Ansprüche 13 bis 15,
**dadurch gekennzeichnet, daß** ein Ergebnissignal erzeugt wird, das eine nicht erfolgreiche summarische Prüfung der Schneidengeometrie angibt, wenn die Anzahl der während der Detektions-Zeit-intervalle detektierten Signale unter der vorbestimmten Anzahl liegt.

17. Verfahren nach einem der Ansprüche 1 bis 16,
**dadurch gekennzeichnet, daß** das Detektieren während der Detektions-Zeitintervalle für eine gewählte Detektionsdauer durchgeführt wird.

18. Verfahren nach einem der Ansprüche 1 bis 17,
**dadurch gekennzeichnet, daß**
- das Bestimmen der Soll-Zeitpunkte für eine gewählte Bestimmungsdauer durchgeführt wird, und/oder
- ein Ergebnissignal erzeugt wird, das eine nicht erfolgreiche Prüfung des Werkzeugs (20) angibt, wenn die Bestimmung der Soll-Zeitpunkte länger als die gewählte Bestimmungsdauer durchgeführt wird.

19. Verfahren nach Anspruch 17 oder 18,
**dadurch gekennzeichnet, daß** die Detektionsdauer und/oder die Bestimmungsdauer in Abhängigkeit der Drehzahl des Werkzeugs und/oder in Abhängigkeit der Soll-Teilung bestimmt wird.

20. Verfahren nach einem der Ansprüche 1 bis 19,
**dadurch gekennzeichnet, daß** nach Ablauf der Prüfung das Verfahren gemäß einem der vorhergehenden Ansprüche wiederholt wird, um einen weiteren Bereich auf dem Werkzeug (20) zu prüfen, wobei das Werkzeug (20) relativ zu dem Meßbereich (30) so verfahren wird, daß eine durch die Drehung entstehende Hüllfläche des weiteren zu prüfenden Bereichs in den Meßbereich eintaucht.

21. Verfahren nach einem der Ansprüche 1 bis 20,
**dadurch gekennzeichnet, daß** zusätzlich zur Drehung des Werkzeugs (20) dasselbe gleichzeitig relativ zu dem Meßbereich (30) bewegt wird, so daß eine durch die Drehung und die Relativbewegung des Werkzeugs (20) entstehende Hüllfläche des zu prüfenden Bereichs (32) in den Meßbereich (30) eintaucht.

22. Meßsystem zum Prüfen einer Schneidengeometrie eines mit einer gewählten Drehzahl drehantreibbaren Werkzeugs (20), mit
- einem Sender (10) zum Aussenden eines Messstrahls (14),
- einem Empfänger (12) zum Empfangen des Meßstrahls (14) und zum Ausgeben von Signalen, die einen empfangenen Meßsträhl (14) angeben,
- einer mit dem Empfänger (12) verbundenen Auswerteeinheit (18) zum Empfangen der von dem Empfänger (12) ausgegebenen Signale und zum Erzeugen von Signalen, die Wechselwirkungen des Meßstrahls (14) mit Hindernissen auf seinem Ausbreitungsweg angeben, in Abhängigkeit der empfangenen Signale und
- einer Steuereinheit (16) zum Steuern des Meßsystems,
**dadurch gekennzeichnet, daß**
- die Auswerteeinheit (18) die Signale des Empfängers (12) nur während gewählter Auswerte-Zeitintervalle auswertet, die jeweils einen Soll-Zeitpunkt umfassen, an dem ein dem zu prüfenden Bereich (32) entsprechender Bereich eines eine Soll-Teilung aufweisenden Referenzwerkzeugs während der Drehung in den Meßstrahl (14) eintaucht.

23. Meßsystem zum Prüfen einer Schneidengeometrie eines mit einer gewählten Drehzahl drehantreibbaren Werkzeugs (20), mit
- einem Sender (10) zum Aussenden eines Messstrahls (14),
- einem Empfänger (12) zum Empfangen des Meßstrahls (14) und zum Ausgeben von Signalen, die einen empfangenen Meßstrahl (14) angeben,
- einer mit dem Empfänger (12) verbundenen Auswerteeinheit (18) zum Empfangen der von dem Empfänger (12) ausgegebenen Signale und zum Erzeugen von Signalen, die Wechselwirkungen des Meßstrahls (14) mit Hindernissen auf seinem Ausbreitungsweg angeben, in Abhängigkeit der empfangenen Signale und
- einer Steuereinheit (16) zum Steuern des Meßsystems,
**dadurch gekennzeichnet, daß**
- der Empfänger den Meßstrahl (14) nur während gewählter Empfangs-Zeitintervalle empfängt, die jeweils einen Soll-Zeitpunkt umfassen, an dem ein dem zu prüfenden Bereich (32) entsprechender Bereich eines eine Soll-Teilung aufweisenden Referenzwerkzeugs während der Drehung in den Meßstrahl (14) eintaucht.

24. Meßsystem zum Prüfen einer Schneidengeometrie eines mit einer gewählten Drehzahl drehantreibbaren Werkzeugs (20), mit
- einem Sender (10) zum Aussenden eines Messstrahls (14),
- einem Empfänger (12) zum Empfangen des Meßstrahls (14) und zum Ausgeben von Signalen, die einen empfangenen Meßstrahl (14) angeben,
- einer mit dem Empfänger (12) verbundenen Auswerteeinheit (18) zum Empfangen der von dem Empfänger (12) ausgegebenen Signale und zum Erzeugen von Signalen, die Wechselwirkungen des Meßstrahls (14) mit Hindernissen auf seinem Ausbreitungsweg angeben, in Abhängigkeit der empfangenen Signale und
- einer Steuereinheit (16) zum Steuern des Meßsystems,
**dadurch gekennzeichnet, daß**
- der Sender (10) den optischen Meßstrahl (14) nur während gewählter Sende-Zeitintervalle aussendet, die jeweils einen Soll-Zeitpunkt umfassen, an dem ein dem zu prüfenden Bereich (32) entsprechender Bereich eines eine Soll-Teilung aufweisenden Referenzwerkzeugs während der Drehung in den Meßstrahl (14) eintaucht.

25. Meßsystem nach einem der Ansprüche 22 bis 24,
**dadurch gekennzeichnet, daß** die Auswerteeinheit (18) und/oder die Steuereinheit (16) wenigstens teilweise in dem Sender (10) und/oder in dem Empfänger (12) integriert sind.

26. Meßsystem nach einem der Ansprüche 22 bis 25,
**dadurch gekennzeichnet, daß** die Steuereinheit (16) und/oder die Auswerteeinheit (18) programmierbar sind.

27. Meßsystem nach einem der Ansprüche 22 bis 26,
**dadurch gekennzeichnet, daß** die Steuereinheit (16) und/oder die Auswerteeinheit (18) mit einer Steuerung (26) einer das Werkzeug (20) drehenden Maschine verbunden sind.

28. Meßsystem nach einem der Ansprüche 22 bis 27,
**dadurch gekennzeichnet, daß** der Meßstrahl (14) ein optischer Meßstrahl, vorzugsweise ein Laserlichtstrahl ist.

## Claims

1. A method of testing a cutting-edge geometry of a rotatably drivable tool with a measuring system (10-18), comprising the following steps:
- defining a region to be tested on the tool (20),
- rotating the tool (20) at a chosen constant rotational speed,
- emitting a measuring beam (14) that defines a measuring range (30),
- positioning the tool (20) so that an envelope surface, produced by the rotation, of its region (32) to be tested enters the measuring range (30), and
- detecting signals that indicate interactions of the measuring beam (14) with obstacles in its propagation path,
**characterized in that**
- standard time instants are determined at which a region, corresponding to the region (32) to be tested, of a reference tool having a standard pitch enters the measuring range (30) during the rotation,
- the measuring system (10-18) is synchronized with the rotation of the tool (20) on the basis of the sequence of detected signals, and
- the detection is subsequently performed only during chosen detection time intervals that each comprise a standard time instant.

2. The method according to Claim 1, **characterized in that** the detection time intervals are chosen in such a way that they do not overlap in time.

3. The method according to Claim 1 or 2, **characterized in that** the detection time intervals are chosen in such a way that they each comprise the corresponding standard time instant symmetrically.

4. The method according to one of Claims 1 to 3, **characterized in that** the detection time intervals are chosen in such a way that they start shortly before the corresponding standard time instant and end shortly after the corresponding time interval.

5. The method according to one of Claims 1 to 4, **characterized in that** the standard time instants and/or the detection time intervals are determined as a function of the rotational speed of the tool (20).

6. The method according to one of Claims 1 to 5, **characterized in that** the standard time instants and/or the detection time intervals are determined as a function of the standard pitch.

7. The method according to one of Claims 1 to 6, **characterized in that** the determination of the standard time instants comprises the following steps:
- determining a standard time interval as a function of the standard pitch of the tool (20) and of the chosen rotational speed, and
- detecting the signals that indicate interactions of the measuring beam (14) with obstacles in its propagation path, the detection being performed until at least two consecutive signals are detected whose time spacing corresponds to the standard time interval.

8. The method according to Claim 7, **characterized in that**
- the time spacing of the standard time instants corresponds to the standard time interval, and
- the detection is started during the detection time intervals after a last signal detected in the standard time interval.

9. The method according to one of Claims 1 to 6, **characterized in that** the determination of the standard time instants comprises the following steps:
- defining a sequence of standard time intervals as a function of the standard pitch of the tool (20) that comprises at least two defined standard time intervals, and
- detecting the signals that indicate interactions of the measuring beam (14) with obstacles in its propagation path, the detection being performed until at least two consecutive signals are detected whose time spacing corresponds to one of the standard time intervals.

10. The method according to one of Claims 7 to 9, **characterized in that** the detection of signals is performed continuously for the purpose of synchronizing the measuring system (10-18).

11. The method according to Claim 9 or 10, **characterized in that**
- a sequence of time spacings of the standard time instants corresponds to the defined sequence of standard time intervals, and
- the detection is started during the detection time intervals after the last of the signals detected in one of the standard time intervals.

12. The method according to one of Claims 1 to 11, **characterized in that** the entry of the envelope surface of the region (32) to be tested into the measuring range (30) is detected using the measuring beam (14).

13. The method according to one of Claims 1 to 12, **characterized in that** a result signal that indicates a summary result of the testing of the cutting-edge geometry is generated in response to the detected signals.

14. The method according to Claim 13, **characterized in that** a result signal is generated that indicates a successful summary testing of the cutting-edge geometry if a number of signals detected during the detection time intervals is above a predetermined number or corresponds to the predetermined number.

15. The method according to Claim 13, **characterized in that** the determination of the standard time instants and the detection are performed again if the number of the signals detected during the detection time intervals is below the predetermined number.

16. The method according to one of Claim 13 to 15, **characterized in that** a result signal is generated that indicates an unsuccessful summary testing of the cutting-edge geometry if the number of the signals detected during the detection time intervals is below the predetermined number.

17. The method according to one of Claims 1 to 16, **characterized in that** the detection is performed during the detection time intervals for a chosen detection time period.

18. The method according to one of Claims 1 to 17, **characterized in that**
- the determination of the standard time instants is performed for a chosen determination time period, and/or
- a result signal is generated that indicates an unsuccessful testing of the tool (20) if the determination of the standard time instants is performed for longer than the chosen determination time period.

19. The method according to Claim 17 or 18, **characterized in that** the detection time period and/or the determination time period are/is determined as a function of the rotational speed of the tool and/or as a function of the standard pitch.

20. The method according to one of Claims 1 to 19, **characterized in that**, after completion of the test, the method in accordance with one of the preceding claims is repeated in order to test a further region on the tool (20), the tool (20) being moved relative to the measuring range (30) in such a way that an envelope surface, produced by the rotation, of the further region to be tested enters the measuring region.

21. The method according to one of Claims 1 to 20, **characterized in that**, in addition to the rotation of the tool (20), the latter is simultaneously moved relative to the measuring range (30) so that an envelope surface, produced by the rotation and the relative movement of the tool (20), of the region to be tested (32) enters the measuring range (30).

22. A measuring system for testing a cutting-edge geometry of a tool (20) that is adapted to be rotatably driven at a chosen rotational speed, comprising
- a transmitter (10) for emitting a measuring beam (14),
- a receiver (12) for receiving the measuring beam (14) and for outputting signals that indicate a received measuring beam (14),
- an evaluation unit (18) connected to the receiver (12) for receiving signals outputted by the receiver (12) and for generating signals that indicate interactions of the measuring beam (14) with obstacles in its propagation path as a function of the received signals, and
- a control unit (16) for controlling the measuring system, **characterized in that**
- the evaluation unit (18) evaluates the signals of the receiver (12) only during chosen evaluation time intervals, which each comprise a standard time instant at which a region, corresponding to a region (32) to be tested, of a reference tool having a standard pitch enters the measuring beam (14) during the rotation.

23. A measuring system for testing a cutting-edge geometry of a tool (20) that is adapted to be rotatably driven at a chosen rotational speed, comprising
- a transmitter (10) for emitting a measuring beam (14),
- a receiver (12) for receiving the measuring beam (14) and for outputting signals that indicate a received measuring beam (14),
- an evaluation unit (18) connected to the receiver (12) for receiving signals outputted by the receiver (12) and for generating signals that indicate interactions of the measuring beam (14) with obstacles in its propagation path as a function of the received signals and
- a control unit (16) for controlling the measuring system,
**characterized in that**
- the receiver receives the measuring beam (14) only during chosen receiving time intervals that each comprise a standard time instant at which a region, corresponding to the region (32) to be tested, of a reference tool having a standard pitch enters the measuring beam (14) during the rotation.

24. A measuring system for testing a cutting-edge geometry of a tool (20) that is adapted to be rotatably driven at a chosen rotational speed, comprising
- a transmitter (10) for emitting a measuring beam (14),
- a receiver (12) for receiving the measuring beam (14) and for outputting signals that indicate a received measuring beam (14),
- an evaluation unit (18) connected to the receiver (12) for receiving the signals outputted by the receiver (12) and for generating signals that indicate interactions of the measuring beam (14) with obstacles in its propagation path as a function of the received signals and
- a control unit (16) for controlling the measuring system, **characterized in that**
- the transmitter (10) emits the optical measuring beam (14) only during chosen transmission time intervals that each comprise a standard time instant at which a region, corresponding to the region (32) to be tested, of a reference tool having a standard pitch enters the measuring beam (14) during the rotation.

25. The measuring system according to one of Claims 22 to 24, **characterized in that** the evaluation unit (18) and/or the control unit (16) are at least partly incorporated in the transmitter (10) and/or in the receiver (12).

26. The measuring system according to one of Claims 22 to 25, **characterized in that** the control unit (16) and/or the evaluation unit (18) are programmable.

27. The measuring system according to one of Claims 22 to 26, **characterized in that** the control unit (16) and/or the evaluation unit (18) are/is connected to a control (26) of the machine rotating the tool (20).

28. The measuring system according to one of Claims 22 to 27, **characterized in that** the measuring beam (14) is an optical measuring beam, preferably a laser light beam.

## Revendications

1. Procédé pour vérifier la géométrie du tranchant d'un outil pouvant être entraîné en rotation, au moyen d'un système de mesure (10 - 18), comprenant les étapes suivantes :
- on détermine une zone à vérifier sur l'outil (20),
- on fait tourner l'outil (20) à une vitesse de rotation choisie constante,
- on émet un rayon de mesure (14) qui détermine une zone de mesure (30),
- on positionne l'outil (20) de telle sorte qu'une enveloppante formée par la rotation de sa zone à vérifier (32) plonge dans la zone de mesure (30), et
- on détecte des signaux qui indiquent des interactions du rayon de mesure (14) avec des obstacles sur son parcours de propagation,
**caractérisé en ce que**
- on détermine des instants de consigne auxquels une zone d'un outil de référence présentant une subdivision de consigne, ladite zone correspondant à la zone à vérifier (32), plonge dans la zone de mesure (30) pendant la rotation,
- on synchronise le système de mesure (10 - 18) avec la rotation de l'outil (20) en se basant sur la succession de signaux détectés, et
- on effectue la détection ensuite uniquement pendant des intervalles temporels choisis de détection qui incluent chacun un instant de consigne.

2. Procédé selon la revendication 1, **caractérisé en ce que** l'on choisit les intervalles temporels de détection de manière à ne pas de superposer temporellement.

3. Procédé selon l'une ou l'autre des revendications 1 et 2, **caractérisé en ce que** l'on choisit les intervalles temporels de détection de manière à inclure chacun symétriquement l'instant de consigne correspondant.

4. Procédé selon l'une des revendications 1 à 3, **caractérisé en ce que** l'on choisit les intervalles temporels de détection de manière à commencer peu avant l'instant de consigne correspondant et à se terminer peu après l'intervalle temporel correspondant.

5. Procédé selon l'une des revendications 1 à 4, **caractérisé en ce que** l'on détermine les instants de consigne et/ou les intervalles temporels de détection en fonction de la vitesse de rotation de l'outil (20).

6. Procédé selon l'une des revendications 1 à 5, **caractérisé en ce que** l'on détermine les instants de consigne et/ou les intervalles temporels de détection en fonction de la subdivision de consigne.

7. Procédé selon l'une des revendications 1 à 5, **caractérisé en ce que** la détermination des instants de consigne comprend les étapes suivantes :
- on détermine un intervalle temporel de consigne en fonction de la subdivision de consigne de l'outil (20) et de la vitesse de rotation choisie, et
- on détecte les signaux qui indiquent les interactions du rayon de mesure (14) avec des obstacles sur son parcours de propagation, 1a détection étant effectuée jusqu'à ce qu'au moins deux signaux successifs soient détectés dont la distance temporelle coïncide avec l'intervalle temporel de consigne.

8. Procédé selon la revendication 7, **caractérisé en ce que**
- la distance temporelle des instants de consigne correspond à l'intervalle temporel de consigne, et
- l'on commence la détection pendant les intervalles temporels de détection après un dernier signal détecté pendant l'intervalle temporel de consigne.

9. Procédé selon l'une des revendications 1 à 6, **caractérisé en ce que** la détermination des instants de consigne inclut les étapes suivantes :
- on fixe une succession d'intervalles temporels de consigne en fonction de la subdivision de consigne de l'outil (20) qui inclut au moins deux intervalles temporels de consigne fixés, et
- on détecte les signaux qui indiquent des interactions du rayon de mesure (14) avec des obstacles sur son parcours de propagation, la détection étant effectuée jusqu'à ce qu'au moins deux signaux successifs soient détectés dont la distance temporelle correspond à l'un des intervalles temporels de consigne.

10. Procédé selon l'une des revendications 7 à 9, **caractérisé en ce que** l'on effectue en continu la détection de signaux pour synchroniser le système de mesure (10 - 18).

11. Procédé selon l'une ou l'autre des revendications 9 et 10, **caractérisé en ce que**
- une succession de distances temporelles entre les instants de consigne correspond à la succession fixée d'intervalles temporels de consigne, et
- on commence la détection pendant les intervalles temporels de détection après le dernier des signaux détectés pendant l'un des intervalles temporels de consigne.

12. Procédé selon l'une des revendications 1 à 11, **caractérisé en ce que** l'on détecte la plongée de l'enveloppante de la zone à vérifier (32) dans la zone de mesure (30) en utilisant le rayon de mesure (14).

13. Procédé selon l'une des revendications 1 à 12, **caractérisé en ce qu'**en réponse aux signaux détectés, on génère un signal de résultat qui indique un résultat sommé de la vérification de la géométrie du tranchant.

14. Procédé selon la revendication 13, **caractérisé en ce que** l'on génère un signal de résultat qui indique une vérification sommée réussie de la géométrie du tranchant lorsqu'un certain nombre de signaux détectés pendant les intervalles temporels de détection est supérieur à un nombre prédéterminé ou correspond au nombre prédéterminé.

15. Procédé selon la revendication 13, **caractérisé en ce que** l'on effectue la détermination des instants de consigne et la détection une nouvelle fois lorsque le nombre des signaux détectés pendant les intervalles temporels de détection est inférieur au nombre prédéterminé.

16. Procédé selon l'une des revendications 13 à 15, **caractérisé en ce que** l'on génère un signal de résultat qui indique une vérification sommée non réussie de la géométrie du tranchant, lorsque le nombre des signaux détectés pendant les intervalles temporels de détection est inférieur au nombre prédéterminé.

17. Procédé selon l'une des revendications 1 à 16, **caractérisé en ce que** l'on effectue la détection pendant les intervalles temporels de détection pour une durée de détection choisie.

18. Procédé selon l'une des revendications 1 à 17, **caractérisé en ce que**
- l'on effectue la détermination des instants de consigne pour une durée de détermination choisie et/ou
- on génère un signal de résultat qui indique une vérification non réussie de l'outil (20) lorsque l'on effectue la détermination des instants de consigne plus longtemps que la durée de détermination choisie.

19. Procédé selon l'une ou l'autre des revendications 17 et 18, **caractérisé en ce que** l'on détermine la durée de détection et/ou la durée de détermination en fonction de la vitesse de rotation de l'outil et/ou en fonction de la subdivision de consigne.

20. Procédé selon l'une des revendications 1 à 19, **caractérisé en ce qu'**après achèvement de la vérification, on répète le procédé selon l'une des revendications précédentes, afin de vérifier une autre zone sur l'outil (20), l'outil (20) étant déplacé par rapport à la zone de mesure (30), de telle sorte qu'une enveloppante formée par la rotation de l'autre zone à vérifier plonge dans la zone de mesure.

21. Procédé selon l'une des revendications 1 à 20, **caractérisé en ce qu'**en supplément à 1a rotation de l'outil (20), on fait déplacer celui-ci simultanément par rapport à la zone de mesure (30), de sorte qu'une enveloppante, formée par la rotation et par le mouvement relatif de l'outil (20), de la zone à vérifier (32) plonge dans la zone de mesure (30).

22. Système de mesure pour vérifier la géométrie du tranchant d'un outil (20) pouvant être entraîné en rotation à une vitesse de rotation choisie, comportant
- un émetteur (10) pour émettre un rayon de mesure (14),
- un récepteur (12) pour recevoir le rayon de mesure (14) et pour émettre des signaux qui indiquent un rayon de mesure reçu (14),
- une unité d'évaluation (18) reliée au récepteur (12) et destinée à recevoir les signaux émis par le récepteur (12) et à générer des signaux qui indiquent des interactions du rayon de mesure (14) avec des obstacles sur son parcours de propagation, en fonction des signaux reçus, et
- une unité de commande (16) pour commander le système de mesure,
**caractérisé en ce que**
- l'unité d'évaluation (18) évalue les signaux du récepteur (12) uniquement pendant des intervalles temporels d'évaluation choisis qui incluent chacun un instant de consigne auquel une zone, correspondante à la zone à vérifier (32), d'un outil de référence présentant une subdivision de consigne plonge dans le rayon de mesure (14) pendant la rotation.

23. Système de mesure pour vérifier la géométrie du tranchant d'un outil (20) pouvant être entraîné en rotation à une vitesse de rotation choisie, comportant
- un émetteur (10) pour émettre un rayon de mesure (14),
- un récepteur (12) pour recevoir le rayon de mesure (14) et pour émettre des signaux qui indiquent un rayon de mesure reçu (14),
- une unité d'évaluation (18) reliée au récepteur (12) et destinée à recevoir les signaux émis par le récepteur (12) et à générer des signaux qui indiquent des interactions du rayon de mesure (14) avec des obstacles sur son parcours de propagation, en fonction des signaux reçus, et
- une unité de commande (16) pour commander le système de mesure,
**caractérisé en ce que**
- le récepteur reçoit le rayon de mesure (14) uniquement pendant des intervalles temporels de réception choisis qui incluent chacun un instant de consigne auquel une zone, correspondante à la zone à vérifier (32), d'un outil de référence présentant une subdivision de consigne plonge dans le rayon de mesure (14) pendant la rotation.

24. Système de mesure pour vérifier la géométrie du tranchant d'un outil (20) pouvant être entraîné en rotation à une vitesse de rotation choisie, comportant
- un émetteur (10) pour émettre un rayon de mesure (14),
- un récepteur (12) pour recevoir le rayon de mesure (14) et pour émettre des signaux qui indiquent un rayon de mesure reçu (14),
- une unité d'évaluation (18) reliée au récepteur (12) et destinée à recevoir les signaux émis par le récepteur (12) et à générer des signaux qui indiquent des interactions du rayon de mesure (14) avec des obstacles sur son parcours de propagation, en fonction des signaux reçus, et
- une unité de commande (16) pour commander le système de mesure,
**caractérisé en ce que**
- l'émetteur (10) émet le rayon de mesure optique (14) uniquement pendant des intervalles temporels d'émission choisis qui incluent chacun un instant de consigne auquel une zone, correspondante à la zone à vérifier (32), d'un outil de référence présentant une subdivision de consigne plonge dans le rayon de mesure (14) pendant la rotation.

25. Système de mesure selon l'une des revendications 22 à 24, **caractérisé en ce que** l'unité d'évaluation (18) et/ou l'unité de commande (16) sont intégrées au moins partiellement dans l'émetteur (10) et/ou dans le récepteur (12).

26. Système de mesure selon l'une des revendications 22 à 25, **caractérisé en ce que** l'unité de commande (16) et/ou l'unité d'évaluation (18) sont programmables.

27. Système de mesure selon l'une des revendications 22 à 26, **caractérisé en ce que** l'unité de commande (16) et/ou l'unité d'évaluation (18) sont reliées à une commande (26) d'une machine faisant tourner l'outil (20).

28. Système de mesure selon l'une des revendications 22 à 27, **caractérisé en ce que** le rayon de mesure (14) est un rayon de mesure optique, de préférence un rayon de lumière laser.
